Europäisches Patentamt

European Patent Office

Office européen des brevets

(11) Veröffentlichungsnummer: **0 487 837 A1**

## EUROPÄISCHE PATENTANMELDUNG

(21) Anmeldenummer: **91114495.4**

(22) Anmeldetag: **29.08.91**

(51) Int. Cl.⁵: **B65G 57/06**, B65H 31/10, B65H 31/34

(30) Priorität: **30.11.90 DE 4038133**

(43) Veröffentlichungstag der Anmeldung:
**03.06.92 Patentblatt 92/23**

(84) Benannte Vertragsstaaten:
**AT BE CH DE DK ES FR GB GR IT LI LU NL SE**

(71) Anmelder: **Wilhelm Bahmüller Maschinenbau Präzisionswerkzeuge GmbH Industriegebiet-Ost**
W-7067 Plüderhausen(DE)

(72) Erfinder: **Häfner Walter Dipl. Ing.
Trollingerweg 5
W-7307 Aichwald-Aichelberg(DE)**

(74) Vertreter: **Rüger, Rudolf, Dr.-Ing. et al
Webergasse 3 Postfach 348
W-7300 Esslingen/Neckar(DE)**

(54) **Palettiermaschine.**

(57) Eine Vorrichtung (1) zum automatischen Stapeln oder Palettieren von flachen Elementen (2) weist einen in einem Gestell (7) ortsfest angebrachten Sammeltisch (9) auf, auf dem die zu stapelnden Elemente (2) ankommen. Von dem Sammeltisch (9) werden die einzelnen Elemente mit Hilfe eines Überführungstisches (18) in das Lichtraumprofil einer in der Vorrichtung (1) gehaltenen Palette überführt. Im Lichtraumprofil der Palette werden die flachen Elemente entweder von der Palette selbst übernommen oder, falls keine Palette vorhanden ist, von dem Zwischenablagetisch (31). Sowohl der Zwischenablagetisch (31) als auch der überführungstisch (18) sind als Rechen ausgebildet, um ineinander eingreifen zu können.

Oberhalb der Ebene des Sammeltisches befinden sich drei Anschläge (25, 41, 42, 44), von denen einer beweglich ist, während unterhalb der Ebene des Sammeltisches (9) zwei Anschläge (41, 42, 44, 47) vorhanden sind, von denen zwei einstellbar und einer betriebsmäßig hin- und herbewegt wird, um den Stapelkopf zu führen und ausgerichtet zu halten.

Fig. 1

Die Erfindung betrifft eine Vorrichtung zum automatischen Stapeln oder Palettieren von flachen Elementen wie Pappezuschnitten, vorgefalteteten flachliegenden Faltschachteln oder dergleichen.

Aus der DE OS 38 31 825 ist eine Vorrichtung zum Palettieren von einzelnen flachliegenden Elementen oder von daraus bestehenden Kleinstapeln bekannt. Die Vorrichtung weist in einem Gestell gelagerte parallel mit Abstand verlaufende Endlosförderriemen auf, mit deren Hilfe die abzustapelnden Zuschnitte bzw. Kleinstapel herangebracht werden. Vor dem ablaufseitigen Ende der Endlosförderriemen ist eine in Richtung parallel zu der Transportrichtung der Förderriemen bewegliche Tischplatte angeordnet, über deren Oberseite insgesamt drei Seitenanschläge zum Ausrichten eines Teilstapels in dem Gestell gehaltert sind. Einer der drei Anschläge befindet sich den Endlosförderriemen gegenüber an derjenigen Stelle, an der die beim Antransport vorauseilende Kante der Zuschnitte zum Stillstand kommen soll. Dieser Anschlag ist außerdem quer zu der Bewegungsrichtung der ankommenden flachliegenden Elemente verstellbar, um die Maschine auf unterschiedliche Formate einstellen zu können.

Die anderen beiden Ausrichtanschläge erstrecken sich vertikal und parallel zur Bewegungsrichtung der herangeschafften flachliegenden Elemente. Dabei stößt der eine seitliche Ausrichtanschlag mit einem Ende, an den in Transportrichtung angeordneten Anschlag, während der andere Seitenanschlag an dem in Transportrichtung gelegenen Anschlag seitlich vorbeigeht. Beide seitliche Ausrichtanschläge können in der Maschine ebenfalls auf das gewünschte Format eingestellt werden.

Unterhalb des Ablagetisches befindet sich in dem Gestell ein von mehreren Gabelzinken gebildeter Zwischenablagetisch sowie ein von einem Rollengang gebildeter Hubtisch, auf dem eine Palette angeordnet wird, auf der der vollständige Stapel gebildet werden soll.

Unterhalb des hin und her beweglichen Ablagetisches befinden sich zwei weitere Anschläge, die sich parallel und im Abstand zueinander erstrecken und quer zu der Laufrichtung der ankommenden flachliegenden Elemente ausgerichtet sind.

Beim Betrieb der bekannten Vorrichtung wird zunächst der in Förderrichtung gelegene Anschlag oberhalb des Ablagetisches auf das entsprechende Format eingestellt, während die beiden seitlichen Ausrichtanschläge oberhalb des Ablagetisches ein Stück weit zur Seite gefahren sind, um die ankommenden flachliegenden Elemente bzw. Teilstapel beim Einlauf auf den Ablagetisch nicht zu behindern. Nach dem Einlauf auf dem Ablagetisch werden die seitlichen Ausrichtanschläge zusammengefahren, wodurch die auf dem Ablagetisch befindlichen flachliegenden Elemente seitlich also quer zur ankommenden Transportrichtung ausgerichtet werden. Sodann wird der Ablagetisch zurückgezogen, wodurch der auf dem Ablagetisch befindliche Kleinstapel entweder auf die Oberseite des auf der Palette befindlichen Stapels oder auf dem Zwischenablagetisch übergeben wird. Durch die unterhalb des Ablagetisches befindlichen Anschläge wird der Kopf des mittlerweile entweder auf dem Zwischenablagetisch oder auf der Palette gebildeten Stapels bezüglich der zweiten Richtung, nämlich der Richtung ausgerichtet, die parallel zu der Transportrichtung der ankommenden flachliegenden Elemente ist, weil es dort nur Anschläge gibt, die quer zur Transportrichtung liegen.

Eine Ausrichtung quer zu der Transportrichtung erfolgt im Bereich des Kopfes des zwischenzeitlich gebildeten Stapels nicht mehr.

Aus der US-PS 4 189 270 ist eine Vorrichtung zum Zusammentragen von vorgeleimten Furnierblättern zu Stapeln bekannt. Diese Vorrichtung enthält einen Rollengang, über den die vorgeleimten Furnierblätter bis zu einem Anschlag herangeschafft werden. Nach dem Eintreffen der Furnierblätter an dem Anschlag wird ein zwischen den Rollen des Rollengang befindlicher Rechen angehoben und in Achsrichtung der Rollen versetzt, um das auf dem Rollengang angekommene Furnierblatt anzuheben und neben den Rollengang zu versetzen. An dieser Stelle wartet ein ebenfalls als Rechen ausgebildeter Zwischenablagetisch, auf dem das angekommene Furnierblatt übertragen wird, indem der erste Rechen zurückgezogen wird, während ein Anschlag ein Zurückwandern des Furnierblattes verhindert.

Sobald der auf dem Zwischenablagetisch erzeugte Stapel hoch genug ist, kommt von unten her eine Übergabeeinrichtung, die den auf dem Zwischenablagetisch gebildeten Teilstapels geringfügig anhebt, damit der Zwischenablagetisch kräftefrei zurückgezogen werden kann. Sodann legt die Übergabeeinrichtung den eben übernommenen Teilstapel auf einem Förderband ab.

Abgesehen von dem Anschlag am Ende des Rollengangs und dem Anschlag der beim Abstreifen des Furnierblattes von dem ersten Rechen wirksam ist, besitzt die Vorrichtung keine weiteren Anschläge, um die Furnierblätter ordnungsgemäß auszurichten. Dies ist auch weder erforderlich noch zweckmäßig, da die vorgeleimten Furnierblätter dazu neigen, begrenzt aufeinander zu haften, so daß ein nachträgliches Verschieben eines Furnierblattes auf der Oberseite eines anderen Furnierblattes praktisch ausgeschlossen ist. Wenn die ordnungsgemäße Ausrichtung nicht von Anfang an erreicht wird, kann sie nachträglich nicht mehr hergestellt werden bzw. eine bestehende ordnungsgemäße Ausrichtung geht auch beim Überführen des Stapels wegen der Hafteigenschaft des Leims nicht mehr verloren.

Ausgehend hiervon ist es Aufgabe der Erfindung, eine auf unterschiedliche Formate einstellbare Vorrichtung zum Stapeln oder Palettieren von flachen Elementen zu schaffen, die dazu neigen, gegeneinander zu verrutschen.

Diese Aufgabe wird durch die Vorrichtung mit den Merkmalen des Anspruches 1 gelöst.

Die besondere Art der Ausgestaltung der Anschläge gestattet es, den gebildeten Teilstapel auf dem Übergabetisch zunächst einmal bezüglich zweier Seiten fluchtend mit dem unter dem Übergabetisch befindlichen Teilstapel auszurichten. Nach der Übergabe auf den auf dem Zwischenablagetisch befindlichen Teilstapel oder den auf der Palette befindlichen Teilstapel kann mit der neuen Vorrichtung der Stapelkopf bezüglich aller Richtungen ausgerichtet bzw. ausgerichtet gehalten werden. Die den Stapelkopf führenden Anschläge haben dabei vorzugsweise in vertikaler Richtung eine solche Erstreckung, daß die Seitenführung durch die Anschläge erst verloren geht, wenn der zwischen den Anschlägen befindliche Teilstapel ein Gewicht aufweist, das ein hinreichendes Aufeinanderpressen der darunter befindlichen flachen Elemente gewährleistet, um die flachen Elemente gegen ein seitliches Verrutschen zu sichern.

Insbesondere sogenannte Faltschachtelschläuche, d.h. flachliegende Faltschachtelabwicklungen, die parallel zu einer Kante verlaufend mit einer Überlappung versehen sind, an der die Abwicklung zum Schlauch verbunden ist, neigen dazu, quer zu dieser Verdickung, an der der Zuschnitt doppelt liegt, zu verrutschen, wenn die Anpresskraft von oben her nicht hoch genug ist. Bei der neuen Maschine spielt es keine Rolle, ob dieser Streifen, längs dem der Zuschnitt doppelt liegt, in oder quer zur Transportrichtung ausgerichtet ist, weil der stapelkopf an allen vier Seiten von Anschlägen umgeben ist. Selbst wenn etwas verrutscht, was unvermeidbar bei der Übergabe vom Übergabetisch auf den Zwischenablagetisch bzw. den Teilstapel der Palette erfolgt, wird zwangsläufig wieder korrigiert, und zwar auch dann, wenn wegen dabei auftretender Erschütterungen der Stapel in Querrichtung sich verschieben sollte.

Es kann deswegen mit der neuen Vorrichtung ein sehr hoher gerader Stapel erzeugt werden, ohne die Gefahr zunehmend schief zu werden und eventuell von der Palette abzustürzen.

Ein weitgehend pausenfreies Zusammentragen von mehreren Nutzen läßt sich erreichen, wenn ein Sammeltisch vorgesehen ist, der von einem Rollengang gebildet ist, während der Übergabetisch aus zwischen den Lücken der Rollen befindlichen Gabelzinken besteht, während der vierte Anschlag vor dem Rückhub in seiner Ausgangsstellung in eine Höhe gebracht werden kann, die größer ist als die Höhe von Kleinstapeln, die eventuell zwischenzeitlich auf dem Sammeltisch eingetroffen sind.

Besonders günstige konstruktive Verhältnisse ergeben sich, wenn die Bewegungsrichtung des Übergabetisches und die Bewegungsrichtung des Zwischenablagetisches parallel jedoch entgegengesetzt gerichtet sind, in der Weise, daß der Übergabetisch in der entgegengesetzten Richtung aus dem Lichtraumprofil des Hubtisches herausgezogen wird, wie der Zwischenablagetisch.

Die zum Zusammendrücken des Stapelkopfes notwendige periodische Bewegung des dritten Anschlags läßt sich sehr leicht erreichen, wenn der dritte Anschlag mit Hilfe einer Parallelogrammführung an einem Arm gehaltert ist, der parallel zu den Gabelzinken des Zwischenablagetisches verläuft. Er braucht in diesem Falle auch nur ein kurzes Stück quer zu den Gabelzinken verstellbar zu sein, und zwar etwa entsprechend der Teilung der Gabelzinken des Zwischenablagetisches, um Toleranzen auszugleichen, wenn zwecks Einstellung auf ein anderes Format der erste Anschlag zwischen Zinken des Zwischenablagetisches eingestellt werden muß, was wegen der speziellen Ausrichtung des ersten Anschlags ohne weiteres möglich ist.

In der Zeichnung ist ein Ausführungsbeispiel des Gegenstandes der Erfindung dargestellt, es zeigen

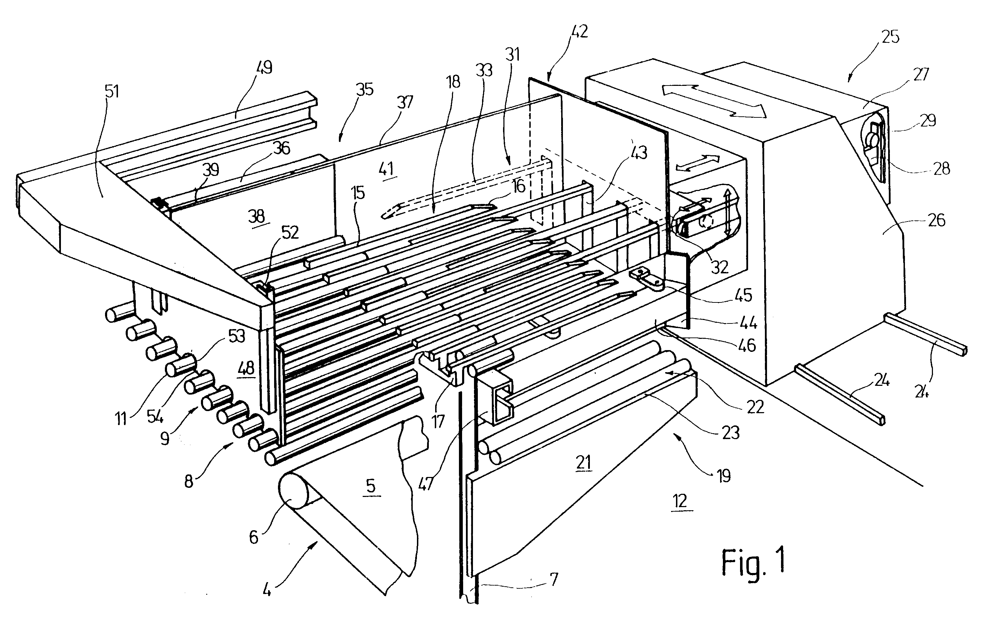

Fig.1 eine Vorrichtung gemäß der Erfindung in einer perspektivischen Ansicht von oben, wobei nur die funktionswesentlichen Teile dargestellt und die Teile des sie halternden oder lagernden Gestells im wesentlichen weggelassen sind;

Fig.1-7 unterschiedliche Betriebsstellungen der Vorrichtung bei der Übergabe eines Kleinstapels, auf den im Lichtraumprofil des Hubtisches befindlichen Teilstapel in einer perspektivischen Ansicht von oben;

Fig.8-18 die Arbeitsweise der Vorrichtung bei der Übergabe auf den bereits gebildeten Stapelkopf in einer schematisierten Seitenansicht;

Fig.19 die Einstellung der Anschläge 1, 2 und 3 bei einem Format in einer perspektivischen Draufsicht;

Fig.20 die Einstellung der Anschläge 1, 2 und 4 bei einem bezogen auf die Transportrichtung schmäleren Format und

Fig.21 die Einstellung der Anschläge 1, 2 und 3 bei einem bezogen auf die Transportrichtung kürzeren Format der flachliegenden Elemente jeweils in perspektivischer Darstellung.

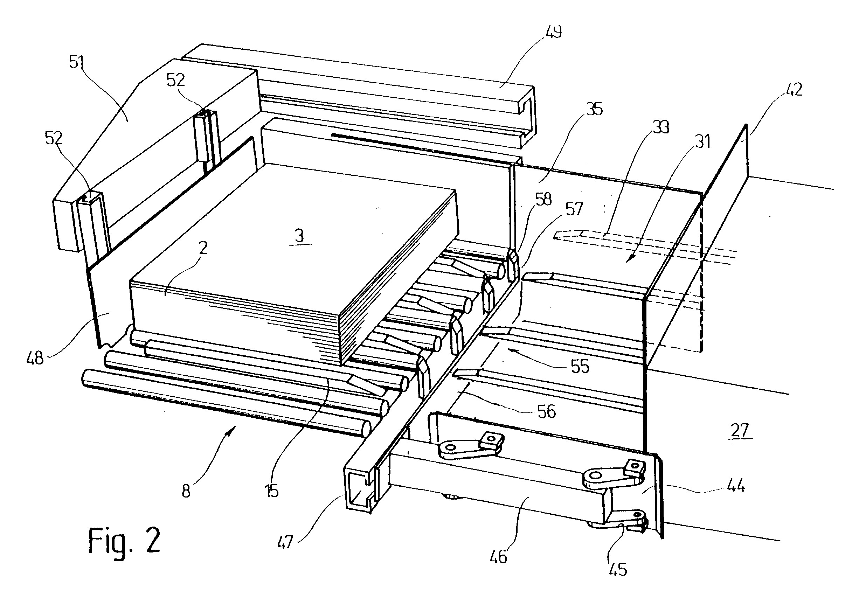

Eine in Fig. 1 veranschaulichte Vorrichtung 1 dient dazu, flache Elemente 2 (Fig. 2), die einzeln oder in Kleinstapeln 3 zu der Vorrichtung 1 gebracht werden, zu stapeln oder zu palettieren. Die Vorrichtung 1 ist in der Zeichnung stark schematisiert veranschaulicht, wobei alle Teile, die für das Verständnis der Erfindung nicht wesentlich sind, wie Gestellteile, Lagerung und dergleichen, weitgehend weggelassen sind.

Die zu stapelnden flachen Elemente 2 bzw. die Kleinstapel 3 werden mit Hilfe eines Endlosförderers 4 herangebracht, von dem lediglich ein der Vorrichtung benachbarter Abschnitt seines Endlosförderbandes 5 veranschaulicht ist, das um eine der Vorrichtung 1 benachbarte ortsfest drehbar gelagerte Umlenkrolle 6 herumläuft. Auf der Oberseite des Endlosförderers 4 werden die flachen Elemente, die Pappezuschnitte, vorgefaltete flachliegende Faltschachteln und ähnliches sein können, herangebracht.

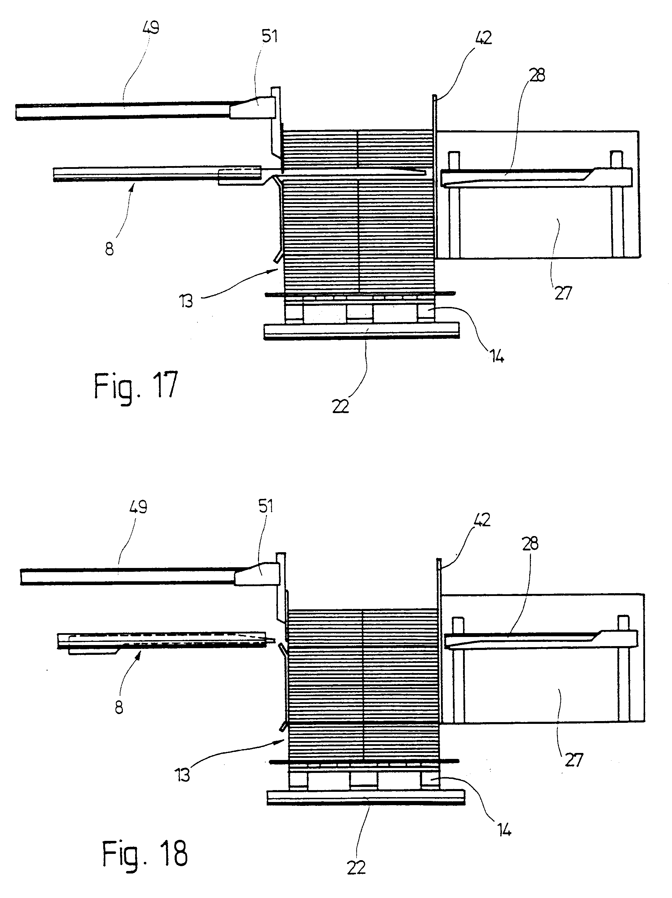

Die Vorrichtung 1 trägt auf einem teilweise veranschaulichten Maschinengestell 7 einen Sammeltisch 8, dessen Oberseite oder Tischfläche mit der Oberseite des Endlosförderers 4 fluchtet und in dessen Verlängerung liegt. Der Sammeltisch 8 ist von einem Rollengang 9 gebildet, dessen einzelne Rollen 11 parallel und mit Abstand nebeneinander in dem Gestell 7 gelagert sind, wobei sich ihre Rotationsachse parallel zu der Achse der Umlenkrolle 6 erstreckt. Die Rollen 11 sind in dem Gestell 7 gestellfest und beidends gelagert. Sämtliche Rollen 11 definieren die ebene Auflagefläche des Sammeltisches 8. Die Höhe dieser Auflagefläche über einem Boden 12, auf dem die Vorrichtung 1 aufgestellt ist, ergibt sich aus der weiter unten gegebenen Funktionsbeschreibung und entspricht im wesentlichen der Höhe des fertig zu bildenden Stapels 13, wie er in den Fig. 17 und 18 zu erkennen ist, zuzüglich der Höhe einer Palette 14, auf denen der Stapel 13 steht, und weiteren Teilen der Vorrichtung 1.

Den Rollen 11 des Rollengangs 9 sind in bekannter Weise nicht weiter veranschaulicht Antriebe zugeordnet, um in noch zu beschreibender Weise die ankommenden flachen Elemente 2 bzw. Kleinstapel 3 vollständig auf den Sammeltisch 8 zu schaffen und dort abzubremsen.

In der Lücke zwischen jeweils 2 benachbarten Rollen 11 befindet sich eine gerade Gabelzinke 15, die an ihrem vorderen Ende mit einer nach unten verlaufenden Rampe versehen ist. Sämtliche im Querschnitt rechtecke Gabelzinken befinden sich mit ihrer Oberseite in einer gemeinsamen Ebene, die knapp unterhalb der von den Rollen 11 definierten Fläche des Sammeltisches 8 liegt. Sie sind an ihrem hinteren dem Sammeltisch 8 zugekehrten Ende an einem gemeinsamen Schlitten 17 befestigt, der in entsprechenden nicht veranschaulichten Führungen des Gestells 7 längs verschieblich geführt ist, wobei die Verschieberichtung parallel zu den Achsen der Rollen 11 verläuft. Die Gabelzinken 15 stellen gemeinsam einen Überführungstisch 18 dar, der die flachen Elemente unterstützt, wenn sie von dem Sammeltisch 8 heruntergeschoben werden. Der Überführungstisch 18 kann zwischen zwei Endstellungen mit Hilfe gesteuerter Antriebseinrichtungen hin und her bewegt werden, wobei in der einen Endstellung, wie Fig. 2 zeigt, die Gabelzinken 15 gegenüber den rechten Enden der Rollen 11 zurückgezogen sind, während in der anderen Endstellung die Gabelzinken 15 über die auskragenden Enden der Rollen 11 überstehen. Der Überstand der Zinken 15 in diese Endstellung ist vom Format der flachen Elemente abhängig. In der vorgeschobenen Endstellung befindet sich der Übergabetisch 18 im wesentlichen in dem

Lichtraumprofil oder Luftraum oberhalb eines Hubtisches 19, der sich vor und unterhalb der rechten Enden der Rollen 11, d.h. des Sammeltisches befindet. Der Hübtisch 19 weist einen Rahmen 21 auf, auf dessen Oberseite ein weiterer Rollengang 22 angeordnet ist, wobei die Außenumfangsflächen der Rollen 23 dieses Rollengangs die Tischfläche des Hubtisches 19 darstellen. Die Tischfläche des Hubtisches 19 ist eine horizontale Ebene.

Der Rahmen 21 des Hubtisches 19 ist an dem Gestell 7 vertikal verschieblich geführt, und kann mittels nicht veranschaulichter Antriebseinrichtungen in nahezu jede beliebige Höhe zwischen dem Boden 12 und der Unterseite des Übergabetisches 18 gebracht werden. Der Rahmen 21 kragt, wie Fig. 1 zeigt, von dem Gestell 7 frei aus, d.h. er erstreckt sich ausgehend von dem Rahmen 7 in derselben Richtung wie die ortsfesten gelagerten Rollen 11 des Sammeltisches 8.

Vor demjenigen Ende des Hubtisches 19, das von dem Gestell 7 abliegt, sind ortsfest bezüglich des Bodens 12 zwei Führungsschienen 24 angeordnet, die sich parallel und im Abstand rechtwinklig zu der Drehachse der Rollen 11 bzw. der dazu parallelen Rollen 23 des Hubtisches 19 erstrecken. Die Führungsschienen 24 dienen der Führung einer Kreuzschlittenanordnung 25, die angetrieben auf den ortsfesten Schienen 24 hin und her bewegbar ist. Sie enthält einen äußeren Schlitten 26, in dem ein mittlerer Schlitten 27 bezüglich einer Längsachse hin und her verstellbar ist. Die Längsachse des mittleren Schlittens 27, entlang der der mittlere Schlitten 27 in nicht weiter gezeigten Führungsschienen geführt ist, verläuft parallel zu den Gabelzinken 15 des Überführungstisches 18. Der mittlere Schlitten 27 haltert einen inneren Schlitten 28, der an vertikal verlaufenden Führungen 29 des mittleren Schlittens in vertikaler Richtung begrenzt hin und her bewegbar ist. Der innere Schlitten 28 stellt seinerseits die Führung für einen rechenförmigen Zwischenablagetisch 31 dar.

Der Zwischenablagetisch 31 besteht aus einem in dem inneren Schlitten 28 längsverschieblich geführten Tischschlitten 32, im wesentlichen gebildet von einem Balken, der sich quer zu den Zinken 15 erstreckt und an dem frei auskragend einseitig eingespannte Zinken 33 befestigt sind. Die Zinken 33 des Zwischenablagetisches haben voneinander etwa den doppelten Abstand, wie die Zinken 15 des Überführungstisches 18 und liegen in vertikalen Ebenen, in der sich auch jeweils die übernächste Rolle 11 des Sammeltisches 8 befindet.

Aufgrund der Freiheitsgrade, die die Kreuzschlittenanordnung 25 ermöglicht, kann der Zwischenablagetisch 31 sowohl der Höhe nach als auch quer zu den Zinken 15 des Überführungstisches 18 verstellt werden. Ferner ist es möglich, durch Bewegen des Tischschlittens 32 die Gabelzinken 33 zwischen zwei Endstellungen hin und her zu bewegen, wobei sie sich in der einen Endstellung in dem Lichtraumprofil über dem Hubtisch 19 befinden, während sie in der anderen Endstellung aus diesem Lichtraumprofil vollständig zurückgezogen sind, und sich innerhalb des mittleren Schlittens 27 befinden.

Um die auf dem Sammeltisch 8 ankommenden bzw. angekommenen flachen Elemente 2 zwangsläufig an der richtigen Stelle bezogen auf ihre Bewegungsrichtung anzuhalten, befindet sich hinter dem Sammeltisch 8, wiederum gesehen bezogen auf die Transportrichtung der von dem Endlosförderer 4 herangeschafften flachen Elemente 2, ein erster Anschlag 35, der aus zwei Abschnitten 36 und 37 besteht.

Der Abschnitt 36 bildet eine dem Sammeltisch 8 zugekehrte vertikale und sich parallel zu den Rollen 11 erstreckenden Anschlagfläche 38, die in dem Gestell 7 ortsfest ist. Hinter der Anschlagfläche 38 ist in dem Abschnitt 36 eine Tasche 39 vorgesehen, in der der Abschnitt 37, der eine ebenfalls vertikale und parallel zu den Rollen 11 verlaufende Anschlagfläche 41 trägt, verschieblich geführt ist. Der Abschnitt 37 besteht somit aus einer verhältnismäßig dünnen Platte, die in die Tasche 39 zurückziehbar oder aus dieser vorschiebbar ist. Die Anschlagfläche 41 springt nur geringfügig gegenüber der Anschlagfläche 38 zurück, so daß für die weitere Erläuterung davon ausgegangen wird, daß die beiden Anschlagflächen 38 und 41 zusammen den praktisch durchgehenden ersten Anschlag 35 bilden, der in dem Gestell 7 ortsfest ist, jedoch in Richtung auf die Kreuzschlittenanordnung 25 mehr oder weniger weit verländer- oder verkürzbar ist, indem der plattenförmige Abschnitt 37 mehr oder weniger weit in die Tasche 39 zurückgezogen wird.

Der Abschnitt 37 des Anschlags 35, der sich über die auskragenden Enden der Rollen 11 hinaus bis zu der Kreuzschlittenanordnung 35 erstreckt, steht mit seiner Anschlagfläche 41 einerseits über die Tischfläche des Sammeltisches 8 nach oben über, und erstreckt sich andererseits auch ein Stück weit nach unten unterhalb der besagten Tischfläche.

Ein zweiter plattenförmiger Anschlag 42 sitzt an dem dem Sammeltisch 8 zugekehrten Ende des mittleren Schlittens 27 und erstreckt sich dort als eine vertikale Ebene. Der zweite Anschlag 42 hat eine vertikale Erstreckung wie der erste Anschlag 35 im Bereich eines Abschnittes 37. Dort wo sich innerhalb des mittleren Schlittens 27 die Zinken 33 bewegen können, ist der Anschlag 42 mit nach unten offenen Schlitzen 43 versehen, um die Beweglichkeit der Zinken 33 nicht einzuschränken.

Wie zu erkennen ist, steht der Anschlag 35 stumpf und rechtwinklig auf der von dem Anschlag 42 definierten vertikalen Anschlagfläche.

Ein dritter Anschlag 44 befindet sich ausschließlich unterhalb der von der Unterseite der Zinken 45 definierten Ebene; er verläuft parallel und im Abstand zu dem Anschlag 35. Die Halterung bzw. bewegliche Lagerung des Anschlags 44 geschieht mit insgesamt vier Parallelogrammlenkern 45, die einenends schwenkbar um eine vertikale Achse an der Rückseite des plattenförmigen Anschlages 44 und anderenends in einem Träger 46 gelagert sind, wobei, wie dies bei Parallelogrammführungen üblich ist, der Lagerabstand der Parallelogrammlenker 45 an dem Träger 46 genauso groß ist, wie der Lagerabstand an der Rückseite des Anschlages 44. Durch Verschwenken der Parallelogrammlenker 45 kann der Anschlag 44 zwischen zwei Endstellungen hin und her bewegt werden, wobei für die Funktion der Vorrichtung 1 nur jener Anteil von Interesse ist, der zu einer Annäherung bzw. Entfernung des Anschlages 44 an den Anschlag 35 bzw. von diesem weg, führt. Die Antriebseinrichtungen zum Bewegen der Parallelogrammlenker 45 sind aus Übersichtlichkeitsgründen weggelassen.

Der Träger 46 sitzt als einseitig eingespannter Balken an einer gestellfesten Schiene 47, die an dem Gestell 7 unterhalb des Sammeltisches 8 angebracht und gegenüber den freien Enden der Rollen 11 zurückversetzt ist. In der Schiene 47 ist der Träger 46 parallel zu der Tischfläche des Sammeltisches 8 verstellbar, und, da die Schiene 47 senkrecht auf der Ebene des ersten Anschlages 35 steht, kann durch Verstellen des Trägers 46 die Grundeinstellung des Anschlages 44 auf das Format der flachen Elemente 2 eingestellt werden.

Die vertikale Erstreckung des Anschlages 44 ist so bemessen, daß seine Unterkante auf derselben Höhe liegt, wie die Unterkante des ersten und des zweiten Anschlages 35 bzw. 42, während seine Oberkante auf einer Höhe liegt, die bei einer Bewegung des Anschlages 44 eine Kollision mit den Zinken 15 verhindert. Die Längenausdehnung des Anschlages 44 entspricht der Länge einer zu dem Anschlag 44 parallel verlaufenden Kante derjenigen zu stapelnden flachen Elemente 2, die das größte, mit der Vorrichtung 1 zu verarbeitende Format aufweisen.

Ein vierter Anschlag 48, der sich ausschließlich oberhalb des Sammeltisches 8 erstreckt, hat den Zweck, die auf dem Sammeltisch 8 eingetroffenen flachen Elemente 2 bzw. Kleinstapel 3 in das Lichtraumprofil über den Hubtisch 19 und gegen den Anschlag 42 zu schieben. Der vierte Anschlag 48 ist zu diesem Zweck sowohl vertikal als auch horizontal in Richtung senkrecht zu dem Anschlag 42 beweglich. Hierzu ist eine gestellfest angeordnete Führungsschiene 49 vorgesehen, in der ein Schlitten 51 angetrieben hin und her bewegbar ist. Die Führungsschiene 49 erstreckt sich horizontal und parallel zu den Achsen der Rollen 44 und damit senkrecht zu der Ebene des zweiten Anschlags 42. An dem Schlitten 51 sitzen wiederum vertikale Führungen 52, in denen der Anschlag 48 vertikal beweglich angetrieben geführt ist. Auch diese Antriebseinrichtungen sind aus Übersichtlichkeitsgründen nicht veranschaulicht.

Um eine Kollision des Schlittens 51 mit Teilstapeln zu verhindern, die sich auf dem Sammeltisch 8 befinden, hat seine Unterkante von der Tischfläche des Sammeltisches 8 einen Abstand entsprechend in der Höhenerstreckung des ersten Anschlages 35 oberhalb des Sammeltisches 8, d.h. ebenso der vertikalen Erstreckung des vierten Anschlags 48.

Der wiederum plattenförmig ausgebildete vierte Anschlag 48 ist an seiner unteren dem Sammeltisch 8 zugekehrten Kante mit Ausnehmungen 53 versehen, die der Kontur der benachbarten Rollen 8 folgen, so daß kleine Fortsätze 54 entstehen, die in die Lücke zwischen jeweils benachbarten Rollen 11 eingreifen. Hierdurch wird bei besonders dünnen flachliegenden Elementen verhindert, daß sich flache Elemente 2 zwischen der Oberseite des Rollengangs 9 und der Unterkante des als Schieber dienenden vierten Anschlags 48 einklemmen.

Schließlich ist noch ein Anschlag 55 vorhanden, der am besten in Fig. 2 zu erkennen ist. Der Anschlag 55 besteht aus mehreren Zinken 57, die auf der Schiene 47 stehend befestigt und an ihrem oberen Ende mit einer Schrägfläche 58 versehen sind. Die Ausrichtung der Schrägfläche 58 ergibt sich aus der Darstellung von Fig. 2. Der in Fig. 2 erkennbare Schlitz der Schiene 47 ist in dem Bereich zwischen dem Träger 46 und dem ersten Anschlag 35 mittels eines darüberlaufenden Stahlbandes 56 abgedeckt, das sich bei einer Verstellung des Trägers 46 in der Nähe des ersten Anschlags 35 aufwickelt. Das Stahlband 56 bzw. die nicht abgedeckten Teile der Schiene 47 sowie einer ggf. unterhalb der Schiene 47 noch angebrachte, in der Zeichnung nicht erkennbaren Platte, bildet gemeinsam mit den Zinken 57 den fünften Anschlag 55.

Zusammengefaßt bedeutet dies, der erste Anschlag 35 ist gestellfest, kann jedoch in Richtung parallel zu den Zinken 15 mehr oder weniger weit in Richtung auf den zweiten Anschlag 42 verlängert oder verkürzt werden. Der zweite Anschlag 42 ist in vertikaler Richtung ortsfest und kann durch Bewegen des äußeren Schlittens 26 vor den freien Enden der Zinken 15 des Überführungstisches 18 hin und her bewegt werden, so daß mehr oder weniger viele Zinken 15 an der dem Betrachter zugekehrten Seite des Überführungstisches 18 neben dem zweiten Anschlag 42 vorbeizeigen können. Abgesehen von dieser Verstellbarkeit ist der zweite Anschlag 42 während des Laufs der Vorrichtung 1 in Ruhe. Der dritte Anschlag 44 befindet sich ausschließlich unterhalb des Überführungstisches 18 und ist auf den ersten Anschlag 35 zu und von diesem weg bewegbar, wobei seine Grundeinstellung durch Verstellung längs der Schiene 47 veränderbar ist. Seine Grundeinstellung wird immer so gewählt, daß seine Anschlagfläche gerade eben nicht mit der benachbarten Kante des zweiten Anschlags 42 kollidiert, wenn sich der Anschlag 44 in jener Endstellung befindet, in der er den kleinsten Abstand von den ersten Anschlag 35 hat. D.h. der Anschlag 44 ist sowohl verstellbar als auch, wie aus der nachstehenden Funktionsbeschreibung ergibt, während des Laufs der Vorrichtung 1 ständig in Bewegung.

Der vierte Anschlag 48 ist sowohl vertikal als auch horizontal beweglich, wobei der vertikale als auch der horizontale Hub unveränderlich und seine Grundeinstellung fest ist.

Der fünfte Anschlag 55 schließlich ist vollständig unveränderlich.

Bei einer anderen Ausführungsform kann der zweite Anschlag 42 ausgehend von der Einstellung auf das jeweilige Format mit Hilfe des mittleren Schlittens 27 um ein kurzes Stück zurückgezogen und anschließend wieder in die ursprüngliche Stellung vorgeschoben werden, um die vertikale Bewegung des Stapels 13 zwischen dem zweiten Anschlag 42 und dem fünften Anschlag 55 nicht zu behindern.

Wenn der vierte Anschlag 48 seine Endstellung erreicht, in der er dem gegenüberstehenden zweiten Anschlag 42 am nächsten ist, fluchtet seine Anschlagfläche, die dem zweiten Anschlag 42 zugekehrt ist, mit der von dem fünften Anschlag 55 definierten vertikalen Ebene, so daß von diesen Anschläge 35, 42, 48 und 55 ein dreiseitiger Schacht begrenzt wird, dessen Grundfläche gleich dem Format desjenigen Stapels 13 ist, der auf der Palette 14 aufgestapelt werden soll. Der Stapel kann sowohl ein Einfachnutzen als auch ein Mehrfachnutzen sein, bei dem mehrere Nutzen auf der Palette 14 nebeneinander stehen, und den gesamten Stapel 13 bilden.

Wird in dieser gedachten Stellung noch der dritte Anschlag 44 hinzugenommen, und zwar in derjenigen Stellung, in der er im Rahmen seiner ständigen Bewegung dem ersten Anschlag 35 am nächsten ist, ergibt sich ein an vier Seiten begrenzter Schacht, mit einer rechteckigen Grundfläche, der den Stapel 13 allseitig umgreift, allerdings nur unterhalb des Überführungstisches 18. Oberhalb des Überführungstisches 18 ist der besagte Schacht nur an drei Seiten durch die Anschläge definiert.

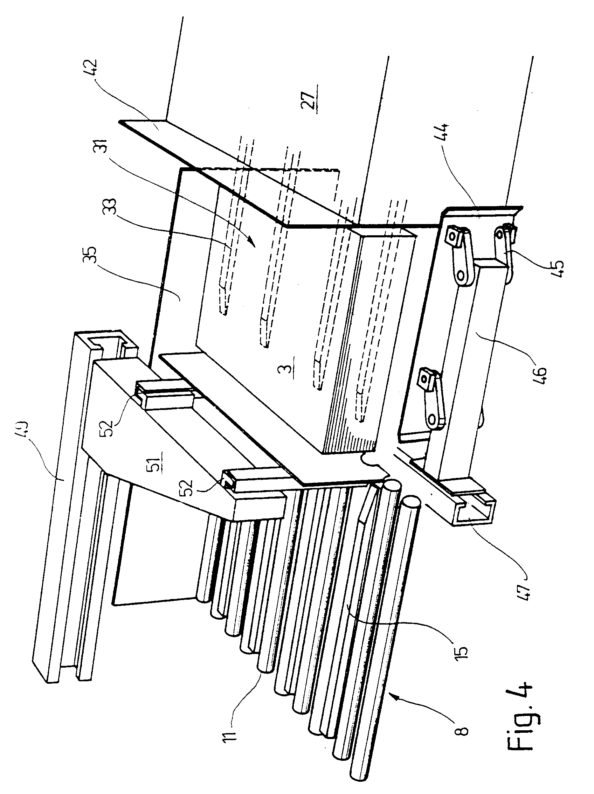

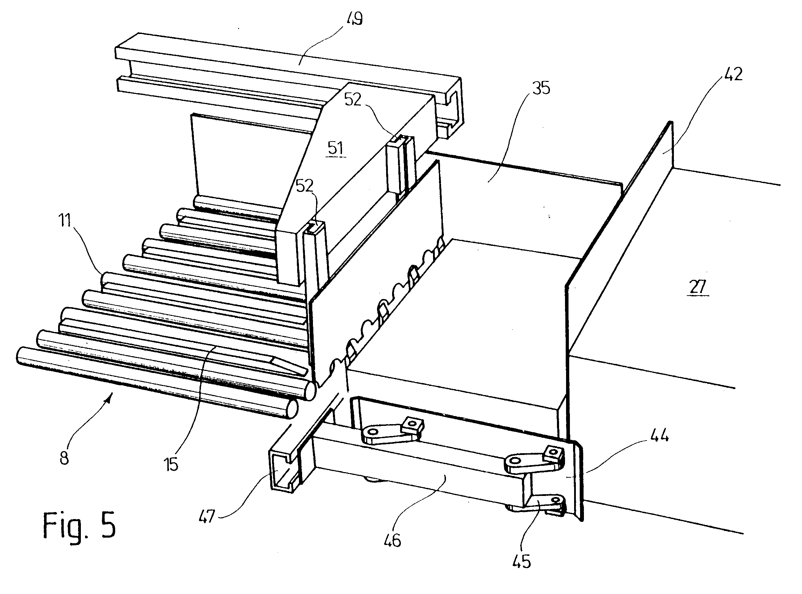

Die insoweit beschriebene Vorrichtung 1 arbeitet wie folgt, wobei zunächst nur auf die Fig. 2 - 7 Bezug genommen wird, um zu erläutern, wie der Teilstapel 3 oder die flachen Elemente 2, die von dem Endlosförderer 4 kommen, auf den Zwischenablagetisch 31 übergeben werden. Die richtige Formateinstellung sei zunächst einmal unterstellt.

Weiterhin sei folgende Ausgangsstellung angenommen: Der Zwischenablagetisch 31 befindet sich in seiner höchstmöglichen Stellung, in der die Oberseite seiner Gabelzinken 33 knapp unterhalb der Unterseite der Zinken 15 des Sammeltisches 8 steht. Die Gabelzinken 33 sind außerdem so weit vorgeschoben, daß sie mit ihren freien Einen in einem kleinen Abstand vor der von dem fünften Anschlag 55 definierten Anschlagfläche stehen. Die Gabelzinken 15 des Überführungstisches 18 sind vollständig zwischen die Rollen 11 des Sammeltisches 8 zurückgezogen und stehen mit ihren freien Enden nicht über die Rollen 11 über. Und ferner ist der vierte Anschlag 48 in jene Stellung gebracht, in der er sich an der Rückseite der Rollen 11 befindet, d.h. an derjenigen Stelle, an der die Rollen in dem Gestell 7 gelagert sind. Schließlich steht der dritte Anschlag 44 in seiner gegenüber dem ersten Anschlag 35 zurückgezogen, d.h. am weitesten entfernt liegenden Stellung. Im übrigen sind die Grundeinstellungen der Anschläge entsprechend dem Format gewählt.

Wenn in dieser angenommenen Ausgangsstellung von dem Endlosförderer 5 ein einzelnes flaches Element 2 oder, wie in Fig. 2 veranschaulicht, bereits mehrere zu einem Kleinstapel zusammengetragene flachliegende Elemente 2 herangeschafft werden, können sie ohne weiteres auf dem Sammeltisch 8 laufen. Die Rollen 11 werden hierbei von der zentralen Steuerung der Vorrichtung 1 zunächst einmal mit einer solchen Umfangsgeschwindigkeit angetrieben, daß keine Verzögerung bei der Übergabe von dem Endlosförderer 4 auf den Sammeltisch 8 erfolgt. Nachdem der Kleinstapel 3 nennenswert auf den Sammeltisch 8 eingelaufen ist, wird die Antriebsdrehzahl für die Rollen 11 von der zentralen Steuerung allmählich abgesenkt, um den Kleinstapel 3 zu verzögern, damit er mit nurmehr einer geringen Geschwindigkeit an der Anschlagfläche 38 des ersten Anschlages 35 anstößt. Eine zu hohe Auftreffgeschwindigkeit würde den Kleinstapel 3 in eine unnötige innere Bewegung versetzen, die in die Ordnung innerhalb des Kleinstapels 3 unter Umständen ungünstig beeinflussen könnte.

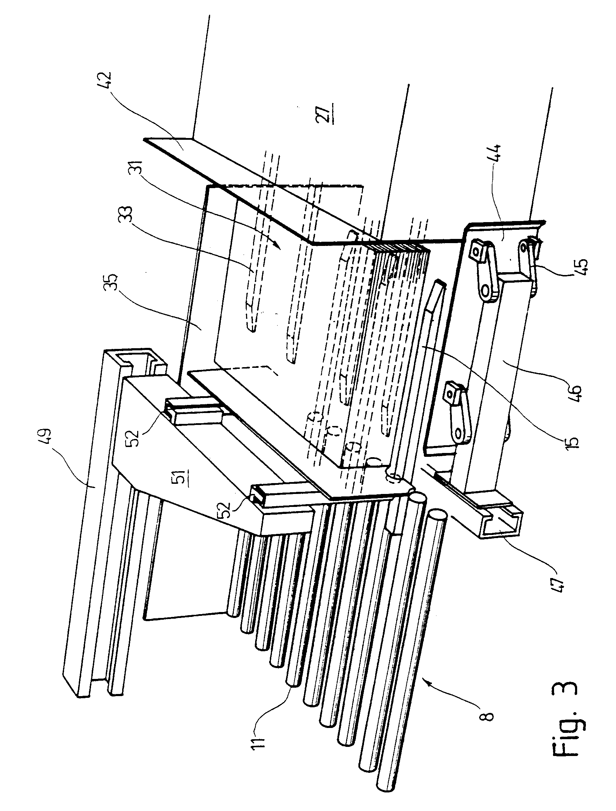

Der Einlauf des Kleinstapels 3 auf den Sammeltisch 8 wird von dem vierten Anschlag 48 in keiner Weise behindert. Sobald der Kleinstapel 3 vollständig auf dem Sammeltisch 8 liegt und an dem ersten Anschlag 35 anstößt, wird von der zentralen Steuerung der Schlitten 41 in Gang gesetzt, wodurch sich der vierte Anschlag 48, der sich in seiner in Fig. 2 gezeigten unteren Stellung befindet, in Richtung auf den zweiten Anschlag 42 zubewegt. Praktisch synchron damit wird auch der Überführungstisch 18 mitvorgeschoben, d.h. seine Gabelzinken 15 folgen im wesentlichen der Bewegung des Kleinstapels 3 und unterstützen den Kleinstapel 3 sobald sein Schwerpunkt sich über die freien Enden der Rollen 11 hinausbewegt hat. Da die Oberseite des Überführungstisches 18 nur geringfügig unter der Oberseite des Sammeltisches 8 liegt, vollführt der Kleinstapel 3 dabei eine äußerst geringe Nickbewegung, die aber die Ordnung in dem Kleinstapel 3 auch dann nicht beeinträchtigt, wenn er von den flachen Elementen 2 gebildet ist, die leicht gegeneinander verrutschen. Die horizontale Bewegung sowohl des vierten Anschlages 48 als auch des Überführungstisches 18 wird beendet, wenn der Kleinstapel 3 an dem Anschlag 42 anstößt, bzw. die freien Enden der Zinken 15 des Überführungstisches 18 nur noch einen geringen Abstand von dem zweiten Anschlag 42 haben. Dieser Zustand ist in Fig. 3 veranschaulicht. Der Kleinstapel 3 ist in dieser Position seitlich zwischen dem Anschlag 42 und dem Anschlag 48 fast eingeklemmt und damit bezüglich dieser Anschläge 42, 48 ausgerichtet. Es wird sodann unter Beibehaltung der Stellung des vierten Anschlages 48 der Überführungstisch 18 in die Ausgangsstellung entsprechend Fig. 2 zurückgezogen, d.h. der Überführungstisch 18 wird unter dem Kleinstapel 3 weggezogen, wobei der vierte Anschlag 48 verhindet, daß sich dabei der Kleinstapel 3 in Richtung der sich wegbewegenden Zinken 15 mitbewegt.

Ergendwann im Verlauf des Rückhubs des Überführungstisches 18 in seiner Ausgangsstellung beginnt sich der Kleinstapel 3 an seiner nicht mehr unterstützten Kante in Richtung auf den Zwischenablagetisch 31, d.h. dessen Gabelzinken 33 abzusenken. Da der Zwischenablagetisch 31 in der angenommenen Ausgangsstellung nur knapp unterhalb der Tischfläche des Überführungstisches 18 steht, kommt keine nennenswerte Kippbewegung des Kleinstapels 3 zustande. Wenn die zentrale Steuerung schließlich festgestellt hat, daß der Überführungstisch 18 wieder in seiner Ausgangsstellung steht, d.h. der Kleinstapel 3 ruht vollständig auf dem Zwischenablagetisch 31, kann der Zwischenablagetisch 31 um die Höhe des Kleinstapels 3 nach unten in Richtung auf den Hubtisch 19 abgesenkt werden. Und zwar soweit, bis die freie Oberseite des auf dem zwischenablagetisch 31 ruhenden Teilstapels ein Niveau erreicht hat, wie es vorher in der angenommenen Ausgangsstellung der Zwischenablagetisch 31 inne hatte.

Nun wird von der zentralen Steuerung die Bewegung des noch zurückgezogenen dritten Anschlags 44 veranlaßt, der sich daraufhin in Richtung auf den ersten Anschlag 35 bewegt. Flache Elemente 2, die eventuell aus dem Kleinstapel 3 in Richtung von dem ersten Anschlag 35 weg herausgerutscht sind, werden von dem dritten Anschlag 44 in den Kleinstapel 3 zurückgeschoben, so daß nun beim Erreichen der anderen Endstellung des Anschlages 44 der Kleinstapel 3 in dem vorerwähnten an vier Seiten begrenzten Schacht befindet, der Abmessungen entsprechend dem Querschnitt des zu bildenden Stapels hat. Mit anderen Worten: Unterhalb der Ebene des Überführungstisches wird der Kleinstapel 3 oder, wie später neu erläutert wird, der dort befindliche Kopf des mittlerweile gebildeten Stapels 13 allseitig geführt und ausgerichtet.

Der nun auf dem Zwischenablagetisch 31 ruhende Kleinstapel 3 bildet den Anfang eines Teilstapels, der schließlich bis zu dem in Fig. 18 veranschaulichten vollen Stapel 13 anwächst.

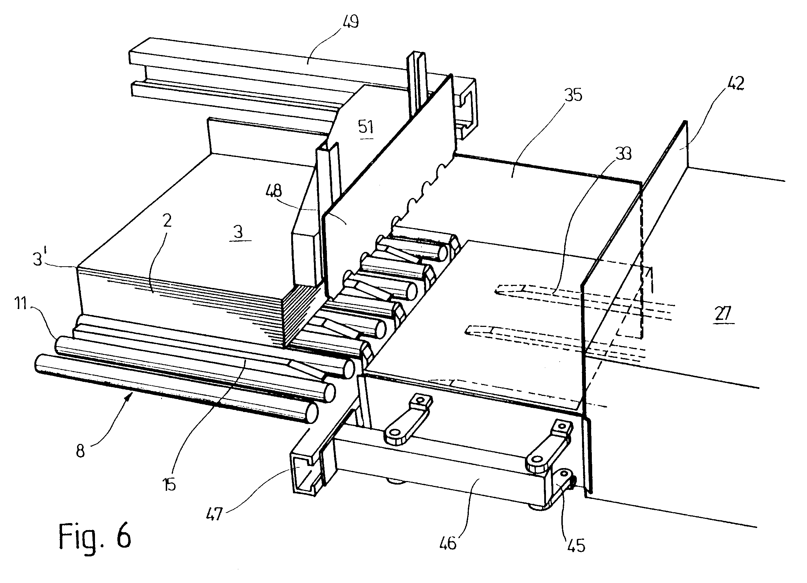

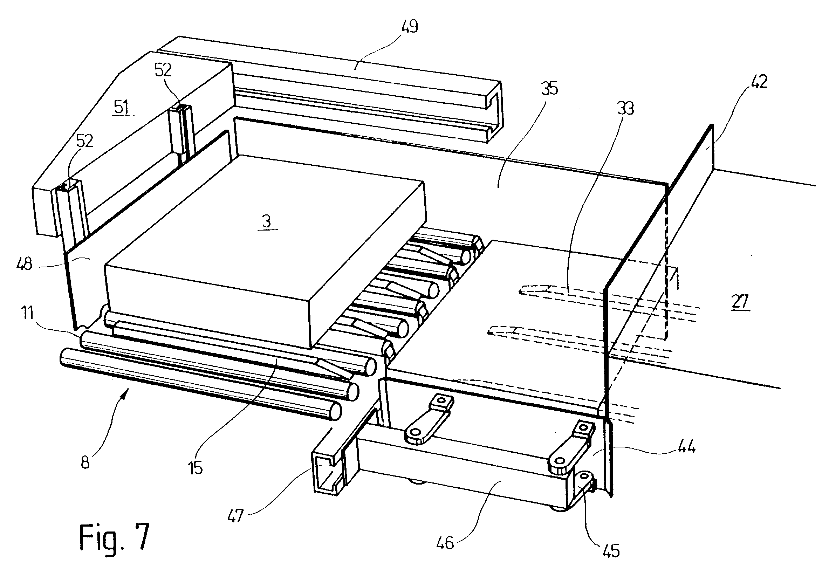

Während das Absenken des Kleinstapels 3 erfolgt, ist, wie die Fig. 3. 4 und 5 erkennen lassen, der Sammeltisch 8 frei und kann einen neuen Teilstapel 3' aufnehmen, wie Fig. 6 zeigt. Um ein Herunterstoßen des Kleinstapels 3' bei der Rückführung des vierten Anschlags 48 zu vermeiden, wird der vierte Anschlag 48 in seiner vertikalen Führung 52 zunächst soweit angehoben, bis seine Unterkante oberhalb der Höhe des Kleinstapels 3' ist, ehe die horizontale Rückbewegung des vierten Anschlages 48 in seiner Ausgangsstellung erfolgt. Wenn der vierte Anschlag 48 seine Ausgangsstellung erreicht hat, wird er in Richtung auf den Sammeltisch 8 wieder abgesenkt, um so die in den Fig. 2 und 7 gezeigte Stellung zu erreichen. Er ist nun bereit, den Kleinstapel 3' zu dem zweiten Anschlag 42 hinzuschieben, in der gleichen Weise, wie dies vorher ausführlich erläutert wurde, lediglich mit dem Unterschied, daß nach dem Zurückziehen des Überführungstisches 18 der Kleinstapel 3' nicht unmittelbar auf die Zinken 33 des Zwischenablagetisches 31 kommt, sondern auf die Oberseite des entsprechend weit abgesenkten vorher auf den Zwischenablagetisch 31 gebrachten Kleinstapels 3. Nachdem insoweit der neue Kleinstapel 3' auf der Oberseite des bereits abgestapelten Kleinstapels 3 liegt, wird der Zwischenablagetisch 31 weiter abgesenkt, bis die Oberseite des aus den beiden Kleinstapeln 3 und 3' bestehenden Teilstapels unterhalb der Unterseite der Gabelzinken 15 liegt, damit beim Vorschieben des Überführungstisches 18 keine Kollision zwischen den Gabelzinken 15 und dem Teilstapel erfolgt, so wie er bereits auf dem Zwischenablagetisch 31 abgestapelt ist. Im übrigen wiederholt sich nun die Bewegung des vierten Anschlages 48, des Überführungstisches 18 sowie des dritten Anschlages 44 immer wieder in der oben ausführlich erläuterten Weise.

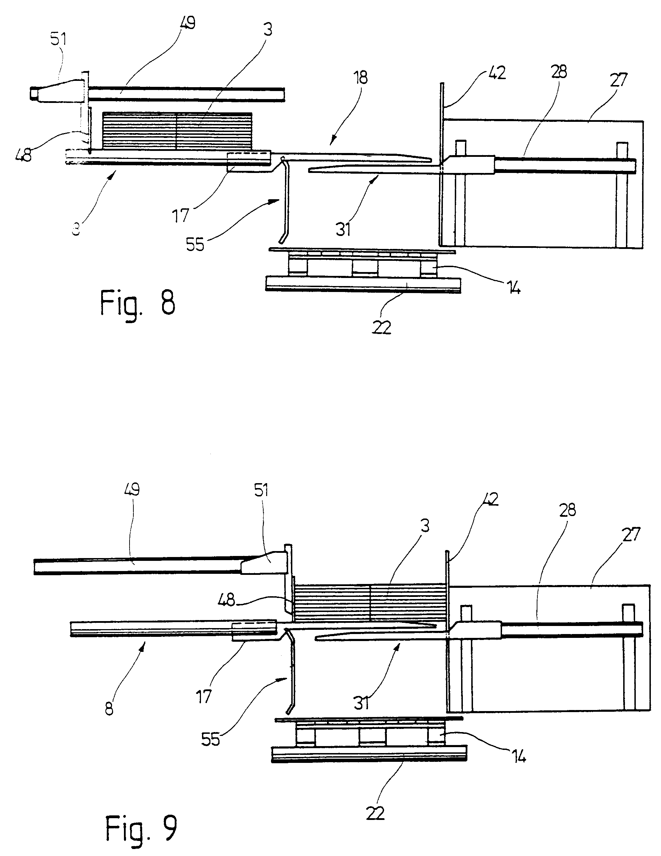

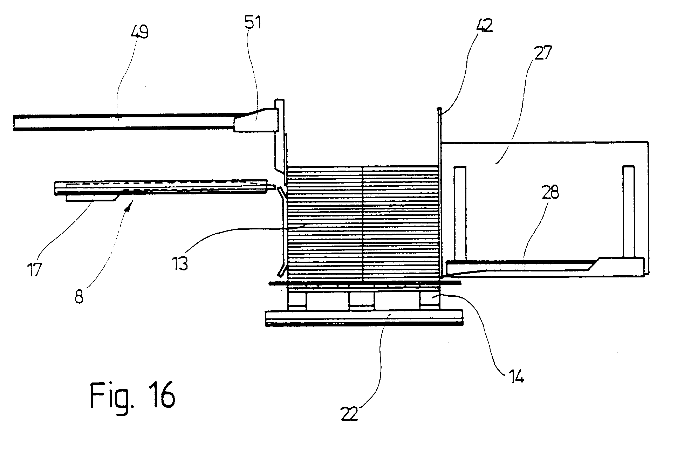

Der Zweck des Zwischenablagetisches 31 ergibt sich aus der nachfolgenden Funktionsablaufsbeschreibung anhand der Fig. 8 - 18. Dabei sei angenommen, daß zunächst einmal die Palette 14 auf dem Hubtisch 19 leer ist. Wegen der unterhalb der Ebene des Sammeltisches 8 sich erstreckenden Anschläge 35, 42, 44 und 55 kann der Hubtisch 19 nur soweit angehoben werden, bis die Oberseite der Palette 14 gerade eben nicht mit den auf gleicher Höhe liegenden Unterkanten der besagten Anschläge zusammenstößt. Die Höhendifferenz zwischen der Oberseite der freien Palette 14 und der von dem Sammeltisch 8 definierten Ebene, die praktisch gleich mit der Ebene des Überführungstisches 18 ist, ist so groß, daß der in den Schacht hineinstürzende Kleinstapel 3 vollständig in Unordnung geraten würde, mit der Gefahr, daß sich einzelne flache Elemente 2 senkrecht stellen und nicht mehr ausgerichtet werden können. Außerdem gestattet der Zwischenablagetisch 31 ein weiteres Zusammentragen von Kleinstapeln, während auf dem Hubtisch 19 eine volle Palette 18 gegen eine leere Palette ausgetauscht wird.

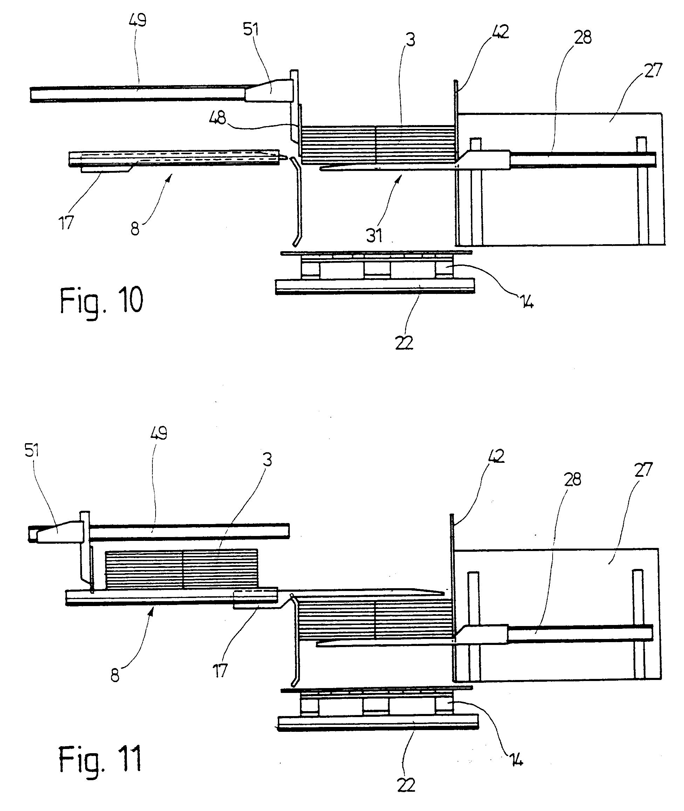

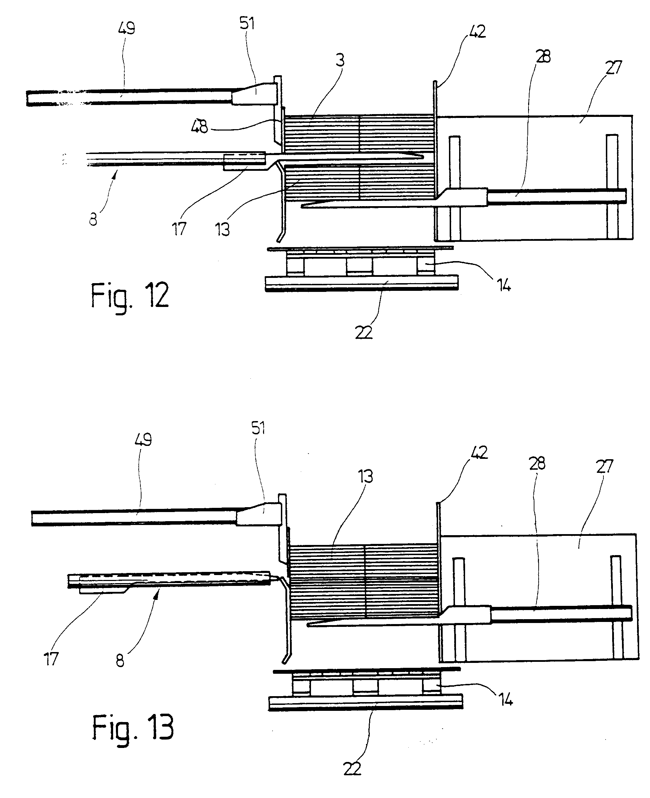

Dies bedeutet, daß beim Eintreffen des ersten Teilstapels 3 auf dem Sammeltisch 8, bei einer vollständig leeren Palette 14, wie in Fig. 8 gezeigt, der Zwischenablagetisch 31 in seine höchste Stellung gebracht wird, in der er knapp unterhalb des Überführungstisches 18 steht, um zunächst in der vorstehend beschriebenen Weise zu arbeiten. Der Kleinstapel 3 kann nun, wie vorher ausführlich erläutert, von dem Sammeltisch 8 auf den Überführungstisch 18 (siehe Fig. 9) und nach Rückführen desselben in die Ausgangsstellung auf den Zwischenablagetisch 31 gebracht werden. Diesen Zustand zeigt Fig. 10. Sodann wird, wie in Fig. 11 gezeigt, der Zwischenablagetisch 31 um die Höhe des eingetroffenen Kleinstapels abgesenkt, damit ohne Behinderung der Überführungstisch 18 ausgefahren werden kann. Hierzu kann, um ein Verklemmen zu vermeiden, der zweite Anschlag 42 ggf. ein kurzes Stück ca. 2 cm zurückgefahren und nach erfolgtem Absenken wieder auf die Ursprungsstellung vorgefahren werden. Gleichzeitig mit dem Heranbringen eines neuen Kleinstapels 3 und nach erfolgtem entsprechendem Absenken des Zwischenablagetisches 31 wird der Anschlag 44 an den Stapelkopf heranbewegt, damit der auf dem Zwischenablagetisch befindliche Teilstapel allseitig ausgerichtet wird. Dies kann gleichzeitig mit dem Vorschieben des neuen Teilstapels 3 von dem Sammeltisch 8 erfolgen, da der Anschlag 44 nicht nach oben über die Tischfläche des Überführungstisches 18 übersteht.

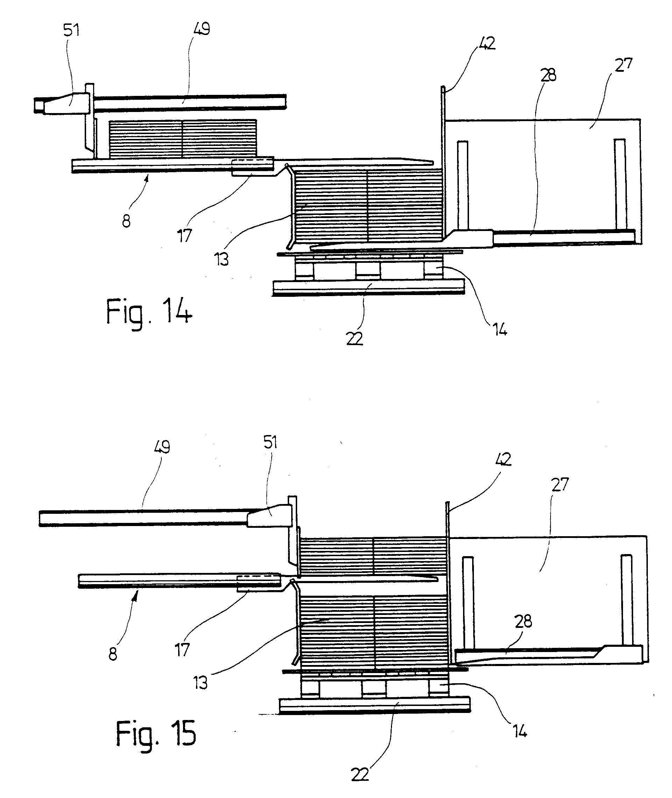

Sodann wird der dritte Anschlag 44 in seine Ausgangsstellung zurückbewegt, ehe durch Zurückziehen des Überführungstisches 18 der neue Kleinstapel auf der Oberseite des auf dem Zwischenablagetisch 31 ruhenden Stapels 13 abgesenkt wird. Diesen Zustand zeigt Fig. 13. Daraufhin kann, wie Fig. 14 veranschaulicht, der Zwischenablagetisch 31 erneut um die Höhe des eingetroffenen Kleinstapels 3 abgesenkt werden, damit, wie voher erläutert, die Oberseite des auf dem Zwischenablagetisch 31 ruhenden Teilstapels unterhalb des Niveaus des Überführungstisches 18 steht. Nach erreichen dieser Position wird erneut der dritte Anschlag 3 betätigt, um wiederum den Stapelkopf auszurichten.

Bei der Beschreibung wird angenommen, daß bereits zwei Klainstapel 3 eine Höhe haben, die etwa in der Höhe des Anschlags 44 entspricht; es kann nun der Zwischenablagetisch 31 aus dem Lichtraumprofil der Palette herausgezogen werden, damit der vorher noch auf den Gabelzinken 33 des Zwischenablagetisches 31 ruhende Teilstapel auf die Oberseite der Palette 14 kommt. Hierzu werden die Gabelzinken 33 mit Hilfe des Tischschlittens 32 hinter den zweiten Anschlag 42 zurückgezogen. Diese Stellung ist in Fig. 15 veranschaulicht.

Während dieses Vorgangs, bei dem durch Zurückziehen des Zwischenablagetisches 31 der Teilstapel tatsächlich auf der Palette 14 abgelegt wird, wird immer noch der Stapelkopf zwischen dem allseits geschlossenen Schacht geführt, der von dem ersten Anschlag 35, dem zweiten Anschlag 42, dem dritten Anschlag 44 und dem fünften Anschlag 55 gebildet ist.

Nach dem Zurückziehen des Zwischenablagetisches 31 ist die Oberseite des jetzt auf der Palette 14 ruhenden Teilstapels nur so wenig unterhalb der Tischfläche des Überführungstisches 18, das ein Durcheinanderfallen des herangebrachten Kleinstapels 3 nicht zu befürchten ist. Der neue Kleinstapel wird sich deswegen beim Zurückziehen des Überführungstisches 18 mehr oder weniger geordnet, auf der Oberseite des auf der Palette 14 ruhenden Teilstapels ablegen, wobei der bewegliche dritte Anschlag 44 dann dafür sorgt, daß eine eventuell aufgetretene mangelhafte Ausrichtung beseitigt wird, wenn er sich gesteuert durch die zentrale Steuereinrichtung entsprechend seinem Arbeitshub auf den ersten Anschlag 35 zubewegt.

Das weitere Absenken des nunmehr um drei Kleinstapel angewachsenen Teilstapels geschieht durch entsprechendes gesteuertes Absenken des Hubtisches 19 bis der auf der Palette 14 ruhende Teilstapel mit seiner Oberkante unter der Ebene der Unterseite des Überführungstisches 18 verschwunden ist. Diese Stellung veranschaulicht Fig. 17, die gleichzeitig zeigt, daß in dieser Stellung ohne weiteres mit Hilfe des Überführungstisches 18 ein neuer Kleinstapel 3 zur Ablage auf den Stapelkopf des Teilstapels in dem Lichtraumprofil der Palette 14 gehalten werden kann. Sodann erfolgt das bereits mehrfach erwähnte Zurückführen des Überführungstisches in die Ausgangslage entsprechend Fig. 13.

Diese Bewegungsabläufe setzen sich so lange fort, bis auf der Palette die maximale gewünschte Stapelhöhe erreicht ist. Dabei wird während des gesamten Stapelvorgangs, sowohl auf dem Zwischenablagetisch 31 als auch direkt auf der Palette 14 immer der Stapelkopf durch vier ihn umgebende teilweise starre, teilweise einstellbare und teilweise während des Stapelvorgangs bewegbare Anschläge geführt bzw. es wird die Ausrichtung der einzelnene eventuell gegeneinander verschobenen flachen Elemente wieder hergestellt.

Sobald die volle Stapelhöhe auf der Palette 14 erreicht ist, wird der Hubtisch 19 vollständig bis auf den Boden 12 abgesenkt, damit der Stapel von der Unterkante der ihn vorher noch umgebenden Anschläge 35, 42, 44, 55 freikommt. Die Palette 14 kann jetzt durch einen Gabelstapler oder ähnliches von dem Hubtisch 19 entnommen und gegen eine neue leere Palette 14 ersetzt werden. Während dieser Vorgang abläuft, wird der Zwischenablagetisch 31 wieder in Position gebracht, so daß während die Palette getauscht wird, ohne Unterbrechung auf dem Zwischenablagetisch 31 weiter abgestapelt werden kann. Nach dem Wechsel der Palette ist wiederum der Zustand nach Fig. 8 erreicht.

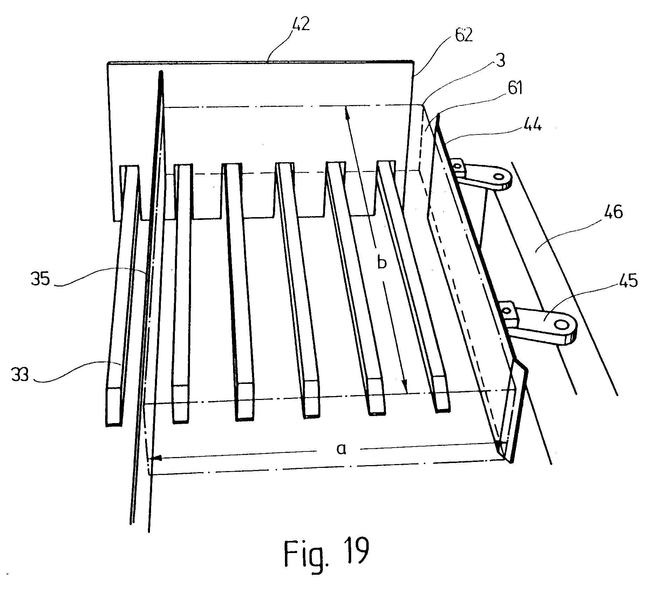

Ein besonderer Vorteil der neuen Vorrichtung besteht in ihrer Anpassungsfähigkeit an unterschiedliche Formate, ohne hierzu Teile auswechseln oder wegbauen zu müssen. Die Umstellung der Vorrichtung 1 auf ein anderes Format sei nunmehr nachstehend anhand der Fig. 19 - 21 erläutert.

Dabei zeigt Fig. 19 mit gestrichelten Linien einen gedachten Kleinstapel 3, der eine Länge a und eine Breite b aufweist. Um die Vorrichtung 1 auf dieses Format einzustellen, wird nach dem Zurückziehen der Gabelzinken 33 hinter den Anschlag 42 der äußere Schlitten 26 auf den Schienen 24 so weit verstellt, bis die Seite 61 des an den Anschlag 35 anstoßenden gedachten Kleinstapels 3 über den Anschlag 42 seitlich, d.h. seine Seitenkante 62 übersteht. Der äußere Schlitten 26 wird hierzu in Schrittweiten verstellt, die der Teilung der Gabelzinken 15 entsprechen, d.h. in jeder Position, die der äußere Schlitten 26 nach der Verstellung einnimmt, fluchten die Gabelzinken 33 wieder mit einer ihnen gegenüberstehenden Lücke zwischen den Gabelzinken 15. Die Verstellbarkeit des äußeren Schlittens 26 erfolgt also in Stufen oder Schritten, wobei die Schrittweite der Teilung des Überführungstisches 18 entspricht, wenn die Gabelzinken 15 und 33 ineinandergreifen. Oder wenn sie höhenmäßig so weit gegeneinander versetzt sind, daß sie nicht kollidieren, kann die Verstellung des äußeren Schlittens 26 in Stufen erfolgen, die nur auf die Lage des ersten Anschlags 35 Rücksicht nehmen muß. Innerhalb der Schritte ist die Verstellung stufenlos. Nach dem Stillsetzen des äußeren Schlittens 26 muß der Anschlag 35 in die Lücke zwischen zwei benachbarten Gabelzinken 33 eindringen könne, wie dies alle Figuren zeigen. Der Stapel 3 wird nach der erreichten Einstellung des äußeren Schlittens 26 mehr oder weniger weit über die Kante 62 überstehen. Es muß deswegen auch die Grundeinstellung des beweglichen dritten Anschlages 44 verändert werden. Hierzu wird der dritte Anschlag 44 in seine Arbeitsstellung gebracht, in der er den ersten Anschlag 35 am stärksten angenähert ist. Durch Verschieben seines Trägers 46 längs der Schiene 47 wird die benötigte Grundeinstellung erreicht, in der der lichte Abstand zwischen dem ersten Anschlag 35 und den Anschlag 44 gerade ein kleines Stück größer als die Länge a des Teilstapels 3 ist. In dieser Stellung wird der Träger 46 an der Führungsschiene 47 wieder gesichert.

Die Anpassung an die Breite b geschieht durch Betätigung des mittleren Schlittens 27, der den Anschlag 42 trägt. Bei kleinerer Breite b für die vorhergehende Formate des Kleinstapels 3 notwendig war, wird der mittlere Schlitten 27 auf den Sammeltisch 8 zugestellt, soweit, bis die lichte Weite zwischen dem Anschlag 42 und dem fünften Anschlag 55 gerade etwas größer als die Breite b des Kleinstapels 3 ist.

Selbstverständlich muß nach der Verstellung des mittleren Schlittens 27 die zentrale Steuerung den veränderten Abstand berücksichtigen und darf die Zinken 33 und auch die Zinken 15 nurmehr um einen Betrag entsprechend des kleineren Abstandes zwischen dem Anschlag 42 und dem Anschlag 55 ausfahren, um eine Kollision der Spitzen der Gabelzinken 15 bzw. 33 mit dem Anschlag 42 bzw. mit dem Anschlag 55 oder den Rollen 11 zu vermeiden.

Umgekehrt wird bei einer Vergrößerung der Breite b der mittlere Schlitten 27 samt dem daran sitzenden Anschlag 42 von dem Sammeltisch 8 wegbewegt, um den Abstand zu vergrößern. Dementsprechend kann die zentrale Steuerung die beiden Tische, nämlich den Überführungstisch 18 und den Zwischenablagetisch 31 entsprechend der größeren Weite auch weiter ausfahren.

Darüber hinausgehende Verstellungen sind an der Vorrichtung zur Anpassung an ein anderes Format nicht notwendig.

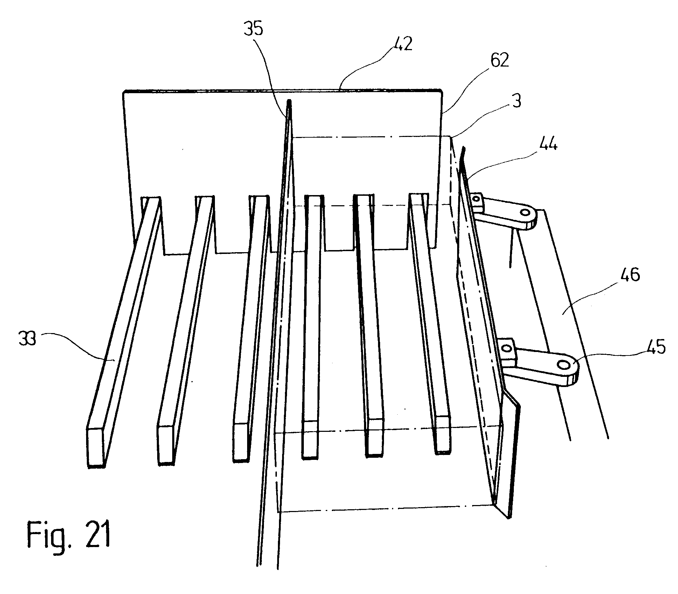

Fig. 21 zeigt schließlich noch ein Format, bei dem der Teilstapel 3 eine verhältnismäßig kleine Länge a hat. In diesem Falle ragt der Anschlag 35 zwischen die beiden mittleren Gabelzinken 33 hinein, während er bei Fig. 19 zwischen der am weitestens und der unmittelbar benachbarten Gabelzinke 33 verläuft.

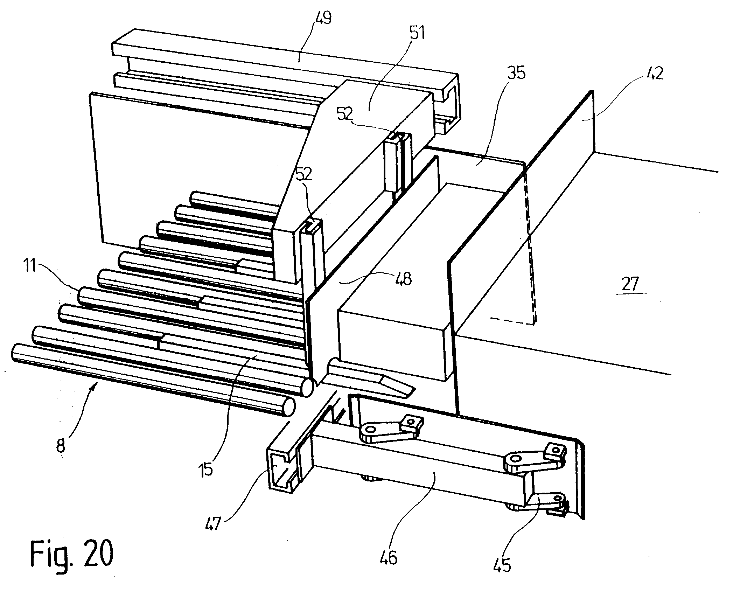

Bei keiner der Einstellungen entsteht eine Kollision zwischen dem Anschlag 44 und dem Anschlag 42 oder den mittleren Schlitten 27, weil in jedem Falle der Anschlag 44 auch bei extrem kleinen Formaten seitlich an dem Anschlag 42 vorbeiführt, wie dies Fig. 20 erkennen läßt, obwohl seine Länge entsprechend dem größten zu verarbeitenden Format bemessen ist.

In den Fig. 19 und 21 sind die Zinken 15 des Überführungstisches 18 weggelassen, um die Übersichtlichkeit nicht zu beeinträchtigen. Tatsächlich wäre aber immer eine Zinke 15 in unmittelbarer Nachbarschaft rechts von dem ersten Anschlag 35, während sich mehr oder weniger viele Zinken 15, die wegen eines kleineren Formates nicht mehr benötigt werden, rechts von dem dritten Anschlag 44 befinden. Der Anschlag 44 wandert ausgehend von dem größtmöglichen Format bis zu dem kleinstmöglichen Format gleichsam unter den Zinken 15 des Überführungstisches 18 durch, wobei beim kleinsten Format entsprechend viele Gabelzinken 15 rechts an dem zweiten Anschlag 42 vorbeizeigen würden.

Die gezeigte Vorrichtung eignet sich nicht nur, um Stapel mit Einfachnutzen zu erzeugen, sie ist auch in der Lage, Stapel mit mehreren Nutzen zu erzeugen, wobei die Nutzen bezogen auf die Förderrichtung und ihre Lage auf dem Sammeltisch 8 sowohl hintereinander als auch nebeneinander stehen können. Bei Anordnung hintereinander sorgen die angetriebenen Rollen 11 dafür, daß die einzelnen Nutzen ohne ineinander zu rutschen hintereinander stehen bleiben.

**Patentansprüche**

1. Vorrichtung (1) zum automatischen oder Stapeln oder Palettieren von flachen Elementen (2, 3) wie Pappezuschnitte, vorgefalteten flachliegenden Faltschachteln und dgl.,

   mit einem Gestell (7), in dem ein eine Stellfläche für eine Palette (14) bildender Hubtisch höhenverstellbar angetrieben geführt und in beliebige Zwischenstellungen zwischen zwei vertikal übereinander befindlichen Endlagen bringbar ist,

mit einem in dem Gestell (7) oberhalb des Hubtisches (19) angeordneten und von zueinander parallelen Gabelzinken (33) gebildeten Zwischenablagetisch (31), der in dem Gestell (7) höhenverstellbar gehaltert angetrieben, in beliebige Zwischenstellungen zwischen zwei vertikal übereinander liegendenden Endstellungen bringbar ist, der zwecks Einstellung auf das Format der flachen Elemente (2, 3) in Richtung senkrecht zu den Gabelzinken (33) horizontal verstellbar und der in dem Gestell (7) vertikal verschieblich geführt, sowie zwischen zwei horizontalen Stellungen in Richtung parallel zu den Gabelzinken (33) angetrieben hin- und herbewegbar ist, wobei er sich in einer Stellung in dem Lichtraumprofil über dem Hubtisch (19) und in der anderen Stellung außerhalb des Lichtraumprofils des Hubtisches (19) befindet,

mit einem in dem Gestell (7) oberhalb des Hubtisches (19) angeordneten Überführungstisch (18), der in dem Gestell (7) auf einer Höhe angeordnet ist, derart, daß sich seine Ablagefläche nicht unterhalb der Ablagefläche des in seiner obersten Stellung gebrachten Ablagetisches (31) befindet und der zwischen zwei Stellungen hin- und herbewegbar ist, wobei er sich in der einen Stellung in dem Lichtraumprofil über dem Hubtisch (19) und in der anderen Stellung außerhalb des Lichtraumprofils des Hubtisches (19) befindet,

mit einem ersten, vertikal verlaufenden und plattenförmigen Anschlag (35), der neben dem Überführungstisch (18) und parallel zu den Gabelzinken (33) des Zwischenablagetisches (31) angeordnet ist sowie sich sowohl oberhalb als auch unterhalb der von dem Überführungstisch (18) definierten Ablagefläche erstreckt und der in Richtung parallel zu den Gabelzinken (33) verstellbar ist,

mit einem zweiten, rechtwinklig zu dem ersten Anschlag (35) verlaufend angeordneten Anschlag (42), der sich ein Stück weit sowohl oberhalb als auch unterhalb der von dem Überführungstisch (18) definierten Ablagefläche erstreckt, und der für den Durchtritt der Gabelzinken (33) des Zwischenablagetisches (31) nach unten offene Schlitze (43) enthält,

mit einem dritten Anschlag (44), der sich nur unterhalb des Überführungstisches (13) parallel und mit Abstand zu dem ersten Anschlag (35) erstreckt, sowie in Richtung senkrecht zu dem ersten Anschlag (35) zwischen zwei Stellungen hin- und herbewegbar und dessen Grundeinstellung zwecks Anpassung an das Format verstellbar ist,

mit einem vierten, vertikal verlaufenden Anschlag (48), der sich parallel zu dem zweiten Anschlag (42) erstreckt und oberhalb der Ablagefläche des Überführungstisches angeordnet sowie zwischen zwei Endstellungen hin- und herbewegbar ist, wobei er in der einen Endstellung in einem größeren Anstand von dem zweiten Anschlag (42) steht als in der anderen Einstellung und

mit einem ortsfesten fünften Anschlag (55), dessen Anschlagfläche parallel und im Anstand zu dem zweiten Anschlag (42) unterhalb des Überführungstisches (18) verläuft.

2. Vorrichtung nach Anspruch 1, dadurch gekennzeichnet, daß der Überführungstisch (18) von einer Anzahl mehrerer, parallel mit Anstand nebeneinander angeordneter Gabelzinken (15) gebildet ist, die auf einem gemeinsamen Schlitten (17) sitzen.

3. Vorrichtung nach Anspruch 1, dadurch gekennzeichnet, daß ein ortsfester Sammeltisch (8) vorhanden ist, der sich oberhalb des Überführungstisches (18) an derjenigen Stelle befindet, an der der Überführungstisch (18) in seiner zurückgezogenen Stellung steht.

4. Vorrichtung nach den Ansprüche 2 und 3, dadurch gekennzeichnet, daß der Sammeltisch (8) von angetriebenen Rollen (11) eines Rollengangs (9) gebildet ist, daß die Rollen (11) parallel mit Abstand zueinander verlaufen, und daß in den Lücken zwischen benachbarten Rollen (11) sich jeweils zumindest eine Zinke (15) des Überführungstisches (18) bewegt.

5. Vorrichtung nach Anspruch 1, dadurch gekennzeichnet, daß der erste Anschlag (35) zwei Abschnitte (18, 41) aufweist, von denen der eine ortsfest ist und sich neben derjenigen Stelle befindet, in der sich der Überführungstisch (18) in seiner Ruhestellung befindet, und daß der andere Abschnitt (41) in Richtung prallel zu den Zinken (33) des Zwischenablagetisches (31) verschiebbar ist.

6. Vorrichtung nach Anspruch 5, dadurch gekennzeichnet, daß sich lediglich der bewegliche Abschnitt (41) des ersten Anschlags (37) sowohl oberhalb als auch unterhalb der durch den Überführungstisch (18) definierten Ebene erstreckt.

7. Vorrichtung nach Anspruch 1, dadurch gekennzeichnet, daß dem dritten Anschlag (44) eine Parallelogrammführung (45) zugeordnet ist.

8. Vorrichtung nach Anspruch 7, dadurch gekennzeichnet, daß die Parallelogrammführung zumindest zwei Parallelogrammlenker (45) enthält, die einends schwenkbar mit dem Anschlag (44) verbunden sind, und die andernends in dem Gestell (7) gelagert sind.

9. Vorrichtung nach Anspruch 7, dadurch gekennzeichnet, daß die Schwenkachse der Parallelogrammführung vertikal ist.

10. Vorrichtung nach Anspruch 8, dadurch gekennzeichnet, daß zur gestellseitigen Lagerung der Parallelogrammlenker (45) ein Träger (46) vorhanden ist, der sich horizontal erstreckt und der quer zu der Bewegungsrichtung des Zwischenablagetisches (41) verstellbar gehalten ist.

11. Vorrichtung nach Anspruch 1, dadurch gekennzeichnet, daß der vierte Anschlag (48) vertikal bewegbar ist, und daß sich seine Unterseite in der einen Stellung in der unmittelbaren Nähe der Oberseite des Überführungstisches befindet, während er in seiner anderen Stellung mit seiner Unterkante oberhalb einer von einer Oberkante des ersten Anschlages (37) definierten Ebene steht.

12. Vorrichtung nach Anspruch 3, dadurch gekennzeichnet, daß der vierte Anschlag (48) im Bereich seiner Unterkante mit einer Vielzahl der Kontur der Rollen (11) folgenden Ausnehmungen (53) versehen ist, derart, daß er mit zwischen den Ausnehmungen (53) gebildeten Fortsätzen (54) ein Stück weit zwischen jeweils benachbarter Rollen (11) eingreift.

13. Vorrichtung nach Anspruch 1, dadurch gekennzeichnet, daß der fünfte Anschlag (55) als Rechen ausgebildet ist.

Fig. 1

Fig. 2

Fig. 3

EP 0 487 837 A1

Fig. 4

Fig. 5

Fig. 6

EP 0 487 837 A1

Fig. 7

EP 0 487 837 A1

Fig. 8

Fig. 9

20

Fig. 10

Fig. 11

EP 0 487 837 A1

Fig. 12

Fig. 13

22

Fig. 14

Fig. 15

Fig. 16

Fig. 17

Fig. 18

Fig. 19

EP 0 487 837 A1

Fig. 20

Fig. 21

EP 0 487 837 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-3 831 825 (WILHELM BAHMÜLLER)<br>* das ganze Dokument *<br>--- | 1,11 | B65G57/06<br>B65H31/10<br>B65H31/34 |
| D,A | US-A-4 189 270 (EHRLICH)<br>* das ganze Dokument *<br>--- | 1-4 | |
| A | GB-A-2 136 404 (BOBST)<br>* Seite 2, Zeile 97 - Zeile 128; Abbildungen 1-7,9 *<br>--- | 1,2,4,12 | |
| A | US-A-3 374 902 (MILLS)<br>* Spalte 2, Zeile 46 - Zeile 61; Abbildungen 1,2 *<br>--- | 1 | |
| A | GB-A-2 117 738 (STOBB INC.)<br>* Seite 2, Zeile 100 - Seite 3, Zeile 8; Abbildungen 1,2 *<br>--- | 1 | |
| A | FR-A-1 588 621 (KOOPERATIVA FÖRBUNDET)<br>* Seite 3, Zeile 31 - Zeile 39 *<br>--- | 1 | **RECHERCHIERTE SACHGEBIETE (Int. Cl.5)** |
| A | DE-A-2 048 511 (BUCCICONI ENGINEERING CO.)<br>* Abbildung 9 *<br>--- | 7,8 | B65G |
| A | EP-A-0 375 849 (KOLBUS)<br>* Abbildungen 1-4 *<br>----- | 1,11 | B65H |

Der vorliegende Recherchenbericht wurde für alle Patentansprüche erstellt

| Recherchenort | Abschlußdatum der Recherche | Prüfer |
|---|---|---|
| BERLIN | 20 FEBRUAR 1992 | SIMON J. |